# EUROPÄISCHE PATENTSCHRIFT

(11) **EP 0 281 971 B1**
(45) Veröffentlichungstag und Bekanntmachung des Hinweises auf die Patenterteilung: **01.02.1995**
(21) Anmeldenummer: 88103437.5
(22) Anmeldetag: 05.03.1988
(51) Int. Cl.: B29C 49/22

(54) **Verfahren zum Herstellen von Hohlkörpern aus thermoplastischem Kunststoff mit einer mehrschichtigen Wandung**
Process for making hollow articles from multi-layered plastic material
Procédé de fabrication de corps-creux en matière plastique multi-couche

(30) Priorität: 12.03.1987 DE 3708006
(43) Veröffentlichungstag der Anmeldung: 14.09.1988
(73) Patentinhaber: Krupp Kautex Maschinenbau GmbH, 53229 Bonn (DE)
(72) Erfinder: Daubenbüchel, Werner, Dipl.-Ing., D-5060 Bergisch Gladbach 4 (DE); Jira, Alfred, D-5330 Königswinter 21 (DE)
(74) Vertreter: Koepsell, Helmut, Dipl.-Ing.

(56) Entgegenhaltungen:
- FR-A- 1 577 594
- US-A- 3 168 207
- US-A- 3 901 958
- US-A- 4 115 491
- US-A- 4 120 924
- PATENT ABSTRACTS OF JAPAN, Band 9, Nr. 128 (M-384)[1851], 4. Juni 1985;& JP-A-60 11 330 (EKUSERU K.K.) 21-01-1985
- PATENT ABSTRACTS OF JAPAN, Band 5, Nr. 101 (M-76)[773], 30. Juni 1981;& JP-A-5644 632 (SEKISUI KASEIHIN KOGYO K.K.) 23-04-1981
- PATENT ABSTRACTS OF JAPAN, Band 5, Nr. 29 (M-56)[701], 21. Februar 1981;& JP-A-55 156 033 (SEKISUI KASEIHIN KOGYO K.K.) 04-12-1980

## Beschreibung

Die Erfindung betrifft ein Verfahren zur Herstellung von Hohlkörpern aus thermoplastischem Kunststoff mit einer mehrschichtigen Wandung gemäß dem Oberbegriff des Anspruches 1.

Bei einem bekannten derartigen Verfahren gemäß US-PS 3,901,958 wird so vorgegangen, daß ein zweischichtiger Vorformling, dessen innere Schicht aus aufschäumbarem Material besteht, in einen Raum hinein extrudiert wird, der unter einem solchen Überdruck steht, daß das Aufschäumen der Schicht aus aufschäumbarem Material verhindert wird. Innerhalb dieses unter Überdruck stehenden Raumes befindet sich auch die Blasform. Der Vorformling wird innerhalb der Blasform in nicht aufgeschäumtem Zustand aufgeweitet. Danach erfolgt eine Druckabsenkung in dem die Hohlform aufnehmenden Raum und in dem Hohlkörper auf ein Niveau, das das Aufschäumen der aus aufschäumbarem Material bestehenden Schicht ermöglicht.

Dieses bekannte Verfahren geht davon aus, daß es nicht oder nur mit großen Schwierigkeiten möglich ist, gemäß einem Vorschlag der US-PS 3,225,127 einen Vorformling aufzuweiten, der bereits aufgeschäumt ist. Diese Schwierigkeiten sind im wesentlichen darauf zurückzuführen, daß das bereits aufgeschäumte Material eines Vorformlings, welches sich noch in warmplastischem Zustand befindet, über Länge und Umfang Bereiche unterschiedlicher Festigkeit und Dehnbarkeit aufweist. Dies hat zur Folge, daß unter der Einwirkung des inneren Überdrucks in der Wandung des Vorformlings bzw. des daraus herzustellenden Artikels Schwachstellen entstehen, die in vielen Fällen dazu führen, daß die Wandung des Vorformlings bzw. des daraus hergestellten Artikels aufreißt, so daß Ausschuß produziert wird. Das bekannte Verfahren trägt dieser Tatsache Rechnung, allerdings unter Inkaufnahme großer verfahrens- und vorrichtungstechnischer Nachteile. Das Aufrechterhalten eines Überdrucks zur Verhinderung des Aufschäumens des aufschäumbaren Materials in der ersten Phase des Herstellungsvorgangs kompliziert den Verfahrensablauf. Entsprechendes gilt für den Wiederaufbau des Überdrucks vor Beginn des nächsten Arbeitszyklus'. Außerdem ist dazu ein großer apparativer Aufwand erforderlich, insbesondere zur Abgrenzung eines Raums gegenüber der Atmosphäre, der die Blasform und die zugehörigen Teile aufnimmt und den Aufbau des erforderlichen Überdrucks ermöglicht. Außerdem führt der Kontakt des Vorformlings mit der Formwandung vor Beginn des Aufschäumvorganges zwangsläufig zu einer Abkühlung des Materials, was den Schäumvorgang beeinträchtigen kann. D. h., daß sich der Schaum nicht ungehindert und völlig frei aufbauen kann. Das bekannte Verfahren sieht auch bereits die Möglichkeit vor, einen zweischichtigen Vorformling herzustellen und aufzuweiten, dessen äußere Schicht aus nichtaufschäumbarem thermoplastischem Kunststoff besteht. Diese Schicht dient jedoch ausschließlich dekorativen Zwecken.

Ferner ist aus der US-PS 3,168,207 ein Verfahren zum Herstellen von Hohlkörpern aus thermoplastischem Kunststoff bekannt, deren Wandung überwiegend aus aufgeschäumtem Material besteht. Die Lehre dieser US-PS basiert ebenfalls auf der Erkenntnis, daß es kaum möglich ist, einen Vorformling, der aus bereits aufgeschäumtem Material besteht, durch inneren Überdruck aufzuweiten, da aufgrund des Vorhandenseins von Bereichen mit unterschiedlicher Wanddicke der Aufweitvorgang unter unkontrollierbaren Umständen stattfindet. Zur Beseitigung dieser Schwierigkeit wird in der US-PS 3,168,207 vorgeschlagen, den schlauchförmigen Vorformling sofort nach Verlassen des Extrusionskopfes und somit vor dem Aufweitvorgang außen und/oder innen so stark abzukühlen, daß sich anden innen und/oder außen befindlichen Oberflächen des Vorformlings eine Haut bildet, die den Vorformling stabilisieren. Diese Verfahrensweise basiert auf der Überlegung, daß aufgrund der schnellen Abkühlung der Oberflächen unter den Fließpunkt des Materials in den abgekühlten Bereichen ein Aufschäumen nicht stattfindet, so daß im Ergebnis ein Vorformling entsteht, dessen Wandung einen inneren, aufgeschäumten Bereich enthält, der an beiden Seiten, also innen und außen, durch eine Haut aus nicht aufgeschäumtem Material begrenzt ist. Wenngleich der Gedanke, durch eine innere und eine äußere Schicht aus nicht aufgeschäumtem Material dem in seinen anderen Bereichen aufgeschäumten Vorformling eine ausreichende Stabilität zu geben, im Prinzip richtig ist, haften der vorgeschlagenen Verfahrensweise erhebliche Nachteile an. Insbesondere ist es in der Praxis unmöglich, den Kühleffekt so genau zu kontrollieren, daß eine gleichmäßige Haut mit gleichbleibenden Eigenschaften entsteht. Daraus ergibt sich, daß auch bei einem so hergestellten Vorformling der anschließende Blasvorgang nicht mit ausreichender Genauigkeit kontrollierbar ist, zumal die außen und/oder innen am Vorforming befindliche, bereits abgekühlten Bereiche weniger leicht aufweitbar sind als die noch wärmeren Bereiche. Dies kann unter anderem am Fertigerzeugnis zu Oberflächen geringerer Qualität führen. Hinzu kommt, daß die Kühlung eine gewisse Zeit in Anspruch nimmt, während welcher der Aufschäumprozeß auch in den der Kühlwirkung unterliegenden Bereichen zumindest beginnt. Diesist unvermeidbar, da der Aufschäumvorgang in dem Augenblick beginnt, in welchem das thermoplastische Material die Austrittsöffnung des Extrusionskopfes verläßt. Es wird im allgemeinen nicht möglich sein, das Kühlmittel in unmittelbarer Nähe der Austrittsöffnung des Extrusionskopfes wirksam werden zu lassen, da dies auch zu einer Temperaturverringerung im unteren Bereich des Extrusionskopfes führen würde. Es könnte zu Störungen bei der Extrusion, in jedem Fall aber zu Qualitätseinbussen, bei den extrudierten Vorformlingen führen. Somit stehen der Anwendung dieses bekannten Verfahrens in der Praxis auch erhebliche Schwierigkeiten entgegen.

Der Erfindung liegt die Aufgabe zugrunde, das Verfahren der einleitend beschriebenen Art so abzuwandeln, daß die Nachteile des vorbeschriebenen bekannten Verfahrens vermieden werden. Insbesondere wird ein Verfahrenablauf angestrebt, der im wesentlichem dem üblichen Verfahrensablauf beim Extrusionsblasformen von Vorformlingen aus nicht aufschäumbarem Material entspricht. Die Vorrichtung zur Durchführung dieses Verfahrens soll nicht komplizierter sein als die üblichen Vorrichtungen zum Extrusionsblasformen. Die Herstellung von teilweise aus aufgeschäumtem Kunststoff bestehenden Hohlkörpern mit einwandfreien Schweißnähten soll unter Verwendung von Vorrichtungen möglich sein, die den üblichen Vorrichtungen zum Koextrusions-Blasformen entsprechen.

Diese Aufgabe wird erfindungsgemäß dadurch gelöst, daß zunächst ein wenigstens zwei Schichten, von denen wenigstens eine Schicht aus aufschäumbarem Kunststoff besteht, aufweisender, vorzugsweise schlauchförmiger Vorformling extrudiert und danach zunächst die Schicht(en) aus aufschäumbarem Material aufgeschäumt wird beziehungsweise werden und eine Blasform um den Vorformling geschlossen und diese in der Blasform bis zur Anlage an der inneren Formwandung aufgeweitet wird unter Anwendung von innerem Überdruck, der so bemessen ist, daß die aufgeschäumte Schicht(en) nicht oder nur unwesentlich komprimiert wird beziehungsweise werden.

Die Erfindung basiert auf der Erkenntnis, daß die Verwendung wenigstens einer Schicht aus nicht aufschäumbarem thermoplastischem Material selbst bei im Verhältnis zur Schicht aus aufschäumbarem Material geringer Dicke es erlaubt, den Vorformling mit der aus aufschäumbarem Material bestehenden Schicht im bereits aufgeschäumten Zustand aufzuweiten, ohne daß die Gefahr der Bildung von Schwachstellen oder gar Durchbrechungen vorhanden ist. Das gilt selbst dann, wenn die Bläschen der aufgeschäumten Schicht sehr groß sind und die aufgeschäumte Schicht ggf. offenzellig ausgebildet ist. Die Schicht aus nicht aufschäumbarem Material kann dabei so dünn sein, daß sie für sich alleine kaum extrudierbar wäre. Die durch die Lehre gemäß der Erfindung erzielbare Vereinfachung kommt vor allem dadurch zustande, daß die einzelnen aufeinanderfolgenden Arbeitsgänge in der beim Extrusionsblasformen üblichen Weise ablaufen. Es ist nicht erforderlich, irgendwelche besonderen Maßnahmen oder Vorrichtungen vorzusehen, um den Aufschäumvorgang zu verzögern und somit unter Kontrolle zu halten. Vielmehr beginnt das Aufschäumen der aus aufschäumbarem Material bestehenden Schicht unmittelbar nach Passieren der Austrittsöffnung des Extrusionskopfes, wenn das thermoplastische Material den Extrusionskopf verläßt und dabei druckentlastet wird. Letzteres ist eine in Anbetracht des im Extrusionskopf herrschenden großen Überdrucks eine selbsttätig mit Austreten aus der Austrittsöffnung des Extrusionskopfes eintretende Wirkung, die in jedem Fall beim Extrusionsvorgang auftritt und gemäß der Erfindung zum Auslösen des Aufschäumvorganges benutzt wird.

In Abhängigkeit von der Zweckbestimmung des aus dem Vorformling herzustellenden Enderzeugnisses kann die Schicht aus nichtaufschäumbarem Material außen angeordnet sein, so daß ein Artikel entsteht, der außenseitig mit einer glatten Oberfläche, innenseitig jedoch mit einer in Abhängigkeit vom Ablauf des Aufschäumvorganges mehr oder weniger geschäumten Schicht versehen ist. Dies ist insbesondere für im Automobilbau verwendete rohrförmige Leitungen oder Kanäle vorteilhaft, durch die Luft beispielsweise zur Belüftung des Innenraums des Fahrzeugs geführt wird. Derartige Kanäle leiten Schall beispielsweise aus dem Bereich des Motorraums in den Innenraum des Fahrzeugs. Der dadurch verursachte Geräuschpegel im Fahrzeuginnenraum kann erheblich herabgesetzt werden, wenn für die Kanäle Hohlkörper der vorstehend beschriebenen Art verwendet werden, da die innere poröse Schicht, die an ihrer inneren Begrenzungsfläche normalerweise offene Poren aufweist, schalldämmend wirkt.

Die Schicht aus aufschäumbarem Material kann sich auch außenseitig befinden und die Schicht aus nicht aufschäumbarem Material innenseitig. Diese Maßnahme kann z. B. dann von Vorteil sein, wenn aus so ausgebildeten Hohlkörpern Kanäle zum Durchfluß von Flüssigkeiten oder Gasen mit darin befindlichem Staub oder anderen Partikeln hergestellt werden. Die Innenschicht aus aufgeschäumtem Material könnte in diesen Fällen die Durchflußbedingungen stören. Die Partikel könnten sich auch in den zum Teil offenen Poren festsetzen. Deshalb kann sich die Notwendigkeit ergeben, eine glatte innere Oberfläche verbunden mit der schall- und wärmedämmenden Wirkung der aufgeschäumten Außenfläche vorzusehen. Die äußere Schicht aus aufgeschäumtem Material kann auch dazu dienen, Geräusche merklich zu verringern, die durch Berührung dieser Schicht mit anderen Teilen des Fahrzeugs, z. B. elektrischen Leitungen, entstehen.

Werden an das Fertigprodukt besonders hohe Anforderungen bezüglich der inneren und der äußeren Schalldämmung gestellt, ist es möglich, zwei aufschäumbare Schichten vorzusehen, zwischen denen sich eine nicht aufschäumbare Schicht befindet.

Für Anwendungsfälle, bei denen eine glatte innere und äußere Oberfläche verlangt wird, jedoch die schalldämmende und wärmedämmende Wirkung der Schicht aus aufschäumbarem Material von besonderer Bedeutung ist, kann diese in der Mitte zwischen den beiden Schichten aus nicht aufschäumbarem Material angeordnet sein. Dabei kann es von Vorteil sein, daß die innen angeordnete Schicht aus nicht aufschäumbarem Material dünner, ggf. sehr viel dünner ist als die äußere Schicht aus nicht aufschäumbarem Material.

Zwischen der äußeren und der inneren Schicht aus einem nicht aufschäumbaren Material kann sich eine Schicht aus einem mit anorganischem Füllmaterial gemischtem Kunststoff befinden. Diese mittlere Schicht kann z. B. aus einem glasfaserverstärkten Kunststoff bestehen. Dies könnte dann von Bedeutung sein, wenn z. B. an die mechanischen Eigenschaften eines so hergestellten fertigen Artikels besonders hohe Anforderungen gestellt werden. Durch Füllmaterial mit hoher Dichte in der mittleren Schicht können auch die akustischen Dämpfungseigenschaften verbessert werden.

Sämtliche Schichten des Vorformlings und des daraus hergestellten Hohlkörpers können aus dem gleichen Material bestehen und sich lediglich dadurch unterscheiden, daß der aufschäumbaren Schicht das Aufschäumen bewirkende Mittel zugesetzt sind. Es ist aber auch möglich, für die Schichten unterschiedliche Materialien vorzusehen.

Die einzelnen Schichten können miteinander verschweißt oder durch einen Haftvermittler verbunden sein. Letzteres ist dann notwendig, wenn die einzelnen Schichten aus Materialien bestehen, die nicht miteinander verschweißbar sind, so daß eine Verbindung zwischen den einzelnen Schichten nicht schon während des Extrusionsvorganges zustande kommt.

Bei der Herstellung von Hohlkörpern nach dem erfindungsgemäßen Verfahren können die den Vorformling bildenden Schichten schon bereits im Bereich des Extrusionskopfes miteinander verbunden werden, da andernfalls die Schicht(en) aus nicht aufschäumbarem Material aus extrusionstechnischen Gründen nicht so dünn gehalten werden können, wie dies ggf. erwünscht ist.

Der zum Aufweiten des vorgeschäumten Vorformlings anzuwendende innere Überdruck ist so zu wählen, daß die Bläschen des aufgeschäumten Materials nicht oder zumindest nicht merklich zusammengedrückt werden. Die Höhe des anzuwendenden Überdrucks wird merklich geringer sein als bei dem üblichen Extrusionsblasverfahren, bei welchem der Druck zwischen 5 und 10 bar betragen kann. Bei dem Verfahren gemäß der Erfindung kann der zum Aufweiten des Vorformlings erforderliche Überdruck z. B. in der Größenordnung von 1 bar, ggf. sogar weniger als 0,5 bar liegen.

Eines der wesentlichen Merkmale des Extrusionsblasverfahrens besteht darin, daß der im allgemeinen schlauchförmige Vorforming mehr Material aufweist als für die Herstellung des fertigen Hohlkörpers erforderlich ist. Jene Bereiche des Vorformlings, die zur Formung des Hohlkörpers in der Blasform nicht benötigt werden, stellen somit Überschußmaterial dar, welches beim Schließen der mehrteiligen Blasform um den Vorformling von diesem abgequetscht wird. Zu diesem Zweck ist die Hohlform mit Abquetschkanten versehen. Diese Abquetschkanen haben zusätzlich die Funktion, an den Stellen, an denen überschüssiges Material abgequetscht wird, zugleich den Vorformling und damit den daraus herzustellenden Hohlkörper zu verschließen. Dies geschieht durch einen Schweißvorgang, durch den einander gegenüberliegende Bereiche des Vorformlings miteinander verbunden werden. Die Qualität dieser Schweißverbindungen ist entscheidend für die Qualität des Hohlkörpers, da die Verwendbarkeit des letzteren im allgemeinen davon abhängt, daß die Schweißnähte allen Beanspruchungen, die der Hohlkörper bei seinem bestimmungsgemäßen Gebrauch erfährt, genügen. Die mit dem Abquetschen von Überschußmaterial und dem gleichzeitigen Bilden einer Schweißnaht im Abquetschbereich zusammenhängenden Probleme sind dem Fachmann ohne weiteres bekannt. Dazu wird z. B. auf die US-PSen 4.150.080 und 4.233.009 verwiesen. Beim Verfahren gemäß der Erfindung kommt noch erschwerend hinzu, daß die aufgeschäumte(n) Schicht(en) bei der für die Schweißnahtbildung erforderlichen Pressung stärker, in gewissem Umfang sogar elastisch, nachgeben und so den Aufbau des für die Schweißnahtbildung notwendigen Druckes erschweren.

Der Schweißnahtbildung kommt eine große Bedeutung auch dann zu, wenn Überschußmaterial nicht nur an den Enden des im allgemeinen schlauchförmigen Vorformlings abgequetscht wird, sondern wenn auch im Bereich zwischen den Enden des herzustellenden Hohlkörpers überschüssiges Material entfernt werden muß. Ob und in welchem Umfang dies der Fall ist, hängt im allgemeinen von der Form des fertigen Hohlkörpers ab. Bei kompliziert geformten Hohlkörpern, beispielsweise Kraftfahrzeug-Tanks oder den vorerwähnten rohrförmigen Leitungen für Kraftfahrzeuge, kann im Extremfall die Notwendigkeitfbestehen, ein am fertigen Hohlkörper umlaufendes Abfallteil von diesem abzuquetschen mit der Folge, daß auch eine entsprechend lange Schweißnaht vorhanden ist. Auch dies ist dem Fachmann geläufig, wie sich beispielsweise aus der EP-PS 0 071 938 ergibt.

Es hat sich herausgestellt, daß die Schweißnahtbildung an einem Vorformling bzw. dem daraus herzustellenden Hohlkörper, der mit wenigstens einer Schicht aus einem aufgeschäumten Material besteht, Probleme verursachen kann, soweit es die Haltbarkeit einer solchen Schweißnaht betrifft. Dies wird im wesentlichen darauf zurückzuführen sein, daß die aufgeschäumte Schicht(en) während des Abquetschvorganges und der damit gleichzeitig stattfindenden Verschweißung sich anders verhalten als Vorformlingswandungen oder Schichten dieser Wandungen, die aus nicht aufgeschäumtem Kunststoff bestehen. Zum Teil wird dies auch dadurch verursacht sein, daß das die aufgeschäumte Schicht bildende Kunststoffmaterial aufgrund der in ihr vorhandenen Bläschen eine größere Beweglichkeit im Sinne einer größeren Fließfähigkeit aufweist. Da Abquetschen und Schweißnahtbildung dadurch bewirkt werden, daß zwei einander gegenüberliegende Wandbereiche des Vorformlings zwischen zwei Abquetschkanten, die zugleich den Druck für die Schweißnahtbildung aufbringen, gegeneinandergedrückt werden, ist es unvermeidbar, daß das zwischen den Abquetschkanten befindliche Kunststoffmaterial im Zuge der Verringerung des Abstandes zwischen beiden Aquetschkanten aus dem Bereich zwischen letzteren herauszufließen beginnt. In gewissem Umfange wird dies unabhängig von der Beschaffenheit der einzelnen Schichten bei jedem Abquetsch- bzw. Schweißvorgang der Fall sein. Jedoch weicht das eine aufgeschäumte Schicht bildende Material aufgrund seiner größeren Fließfähigkeit in stärkerem Ausmaß aus als das Material einer unaufgeschäumten Schicht, so daß demzufolge bei sonst gleichen Bedingungen weniger Material für die Schweißnahtbildung zur Verfügung steht. Dies hat zwangsläufig eine Verringerung der Qualität der Schweißnaht zur Folge, zumal das stärkere Ausweichen des die aufgeschäumte Schicht bildenden Materials aus dem Bereich der Abquetschkanten heraus auch den Aufbau eines Drucks im Schweißnahtbereich beeinträchtigt, da das im Bereich zwischen den Abquetschkanten befindliche Material aufgrund der größeren Fließfähigkeit der aufgeschäumten Schicht der Bewegung der beiden Abquetschkanten weniger Widerstand entgegensetzt.

Das Verfahren gemäß der US-PS 3.901.958 vermeidet diese Schwierigkeiten dadurch, daß zum Zeitpunkt des Abquetschens von Überschußmaterial und des gleichzeitigen Verschweißens des Vorformling dessen Wandung ausschließlich aus noch nicht aufgeschäumtem Material besteht, welches keine größere Fließfähigkeit aufweist. Allerdings ermöglicht das Verfahren gemäß der US-PS deshalb noch nicht die Herstellung einer einwandfreien Schweißnaht, da das Aufschäumen des die aufschäumbare Schicht bildenden Materials im bekannten Fall erst nach Herstellung der Schweißnaht erfolgt mit der Konsequenz, daß durch das auch im Schweißnahtbereich unvermeidbarerweise stattfindende Aufschäumen die Schweißnaht in völlig unkontrollierbarer Weise geschwächt, ggf. sogar aufgelöst wird.

In Anbetracht der vorstehend beschriebenen Probleme sieht die Erfindung weiterhin vor, daß die beim Abquetschen von überschüssigem Material entstehende Schweißnaht als Steg ausgebildet ist und die aufgeschäumte(n) Schicht(en) im Bereich des Stegs durch den bei der Bildung desselben ausgeübten Druck eine Verdichtung und dabei eine Verringerung ihrer Dicke erfährt bzw. erfahren derart, daß die Dicke der verdichteten Schicht(en) kleiner ist als die Dicke dieser Schicht(en) in aufgeschäumtem Zustand.

Dabei können bei Bildung der stegförmig verdickten Schweißnaht die letztere bildenden Wandbereiche des Vorformlings so gepreßt werden, daß die aufgeschäumte(n) Schicht(en) auf eine Dichte und damit Dicke komprimiert wird bzw. werden, die etwa der Dichte und damit der Dicke dieser Schicht(en) in ungeschäumtem Zustand entspricht. Im Ergebnis können somit die die stegförmig verdickte Schweißnaht bildenden Wandbereiche so zusammengedrückt werden, daß der resultierende Steg eine Gesamtdicke aufweist, die der Summe der Dicke sämtlicher Schichten bei der Ausgangsdichte und damit der Ausgangsdicke der aufschäumbaren Schicht(en) entspricht oder gegebenenfalls noch darunter liegt.

Die an sich bekannte stegförmig verdickte Schweißnaht (vgl. z. B. DE-PS 28 21 257) hat den Vorteil, daß die die Schweißnaht bildenden Flächen der einander gegenüberliegenden, miteinander durch die Schweißnaht zu verbindenden Wandbereiche größer sind und somit die spezifische Flächenbelastung beispielsweise bei Beanspruchung der Schweißnaht auf Zug quer zu ihrem Längsverlauf geringer ist. Zum anderen bildet der Steg während der Schweißnahtbildung eine Art Tasche, die zum Inneren des Hohlkörpers hin offen ist. Diese Tasche verhindert, daß beim Bilden der Schweißnaht aufgrund der Druckeinwirkung der beiden einander gegenüberliegenden Abquetschbereiche der Form, die sich einander nähern, das Material, insbesondere das der aufgeschäumten Schicht(en), während der Schweißnahtbildung aus dem Bereich derselben in dem Ausmaß wegfließt, wie es bei üblichen Schweißnähten der Fall ist, die nicht stegartig ausgebildet sind. Zur Erzielung des vorbeschriebenen Effektes kann es zweckmäßig sein, die Tiefe der stegförmig verdickten Schweißnaht quer zu ihrer Längserstreckung, also im wesentlichen parallel zum Verlauf der Schichten innerhalb des Steges so zu wählen, daß sie größer ist als ihre Breite.

Es wird in vielen Fällen nicht erforderlich sein, sämtliche Schweißnähte an einem Hohlkörper in der vorbeschriebenen Weise als Steg auszubilden. So ist es möglich, daß der in der Hohlkörper Abschnitte aufweist, die ohnehin vom Hohlkörper vor dessen Verwendung abgetrennt werden. An diesen Abschnitten, die im allgemeinen Abfall darstellen, der normalerweise zurückgeführt wird, spielt die Qualität der Schweißnähte im allgemeinen keine Rolle.

Einige derzeit bevorzugte Ausführungsbeispiele der Erfindung sind in der Zeichnung dargestellt. Es zeigen:
- Fig. 1: im Schema eine Blasform zur Herstellung von Hohlkörpern in geöffnetem Zustand mit teilweise extrudiertem Vorformling.
- Fig. 2: die Blasform gemäß Fig. 1 in geschlossenem Zustand mit dem durch inneren Überdruck zum herzustellenden Hohlkörper aufgeweiteten Vorformling,
- Fig. 2a: eine Darstellung der Wandung des aufgeweiteten Vorformlings in größerem Maßstab,
- Fig. 3a bis 3d: in größererem Maßstab Ausschnitte aus Wandungen unterschiedlicher Vorformlinge bzw. daraus hergestellter fertiger Artikel,
- Fig. 4: die perspektivische Ansicht eines anderen gemäß dem Verfahren nach der Erfindung hergestellten Hohlkörpers,
- Fig. 5: einen Schnitt nach der Linie V-V der Fig. 4 in vergrößertem Maßstab, wobei zusätzlich Teile der Blasform dargestellt sind.

Die Vorrichtung zur Durchführung des erfindungsgemäßen Verfahrens weist eine im allgemeinen zweigeteilte Blasform 1 auf. Der Blasform 1 ist ein von unten zwischen die beiden Blasformhälften 1a und 1b in das Formnest 2 hineinragender Blasdorn 3 zugeordnet. Beide Blasformhälften 1a, 1b sind mit Abquetschkanten 3a, 3b und 4a, 4b versehen. Die beiden unteren Abquetschkanten 4a, 4b dienen dazu, den nach unten über die Abquetschkanten 4a, 4b vorstehenden Materialüberschuß 20 abzuquetschen.

Die oben an der Blasform 1 befindlichen Aquetschkanten 3a, 3b dienen dazu, überschüssiges Material 24, das nach oben aus dem Formnest 2 vorsteht, von dem innerhalb des Formnestes 2 befindlichen Abschnitt des Vorformlings 5 abzuquetschen.

Die Vorrichtung weist ferner einen Extrusionskopf 4 einer Extrusionseinrichtungauf, die mit wenigstens zwei Extrudern versehen ist. Der Extrusionskopf 4 weist bei Herstellung eines schlauchförmigen Vorformlings eine ringförmige Austrittsöffnung für das thermoplastische Material auf.

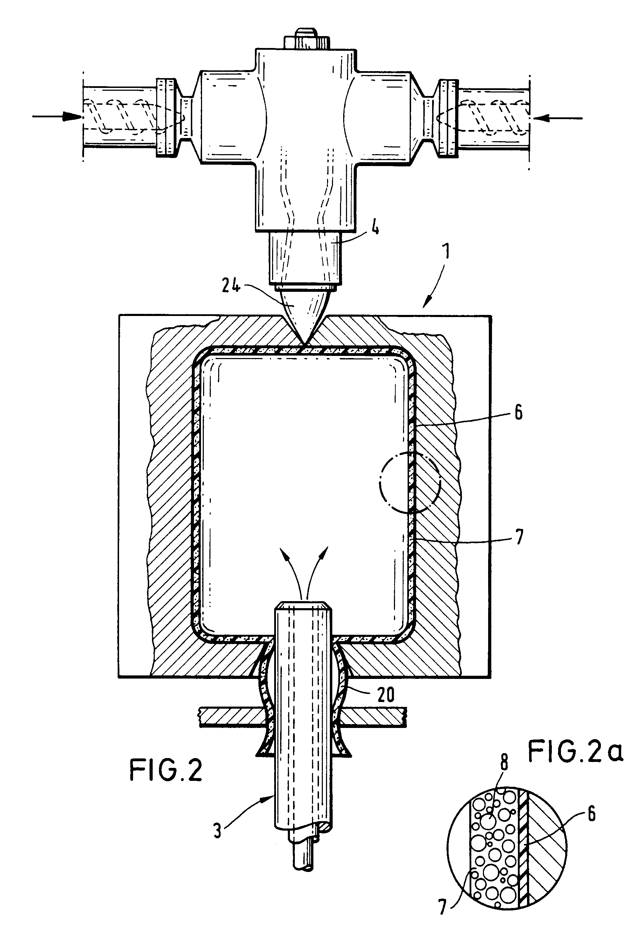

Der Arbeitszyklus zur Herstellung eines Hohlkörpers beginnt bei geöffneter Blasform 1 mit dem Extrudieren des Vorformlings 5. Die Wandung des Vorformlings 5 weist zwei Schichten 6 und 7 auf. Die äußere Schicht 6 besteht aus einem nicht aufschäumbarem Kunststoff, der aus einem der beiden Extruder in den Extrusionskopf geführt wird. Die innere Schicht 7 besteht aus einem aufschäumbaren Kunststoff, der aus dem anderen Extruder in den Extrusionskopf geführt wird. Aufgrund der Druckentlastung nach dem Austritt des Materials aus dem Extrusionskopf 4 wird das Aufschäumen des die innere Schicht 7 bildenden Materials in Gang gesetzt. Der fertige Vorformling 5 besteht demnach spätestens nach Beendigung des zu seiner Herstellung erforderlichen Extrusionsvorganges aus einer aufgeschäumten und einer nicht aufgeschäumten Schicht 7 bzw. 6. Hat der Vorformling 5 seine erforderliche Länge erreicht, wird die Blasform 1 um denselben geschlossen. In der Endphase des Schließvorganges werden die überschüssigen Materialabschnitte 20, 24 abgequetscht, wobei die Abquetschkanten 4a, 4b mit dem Blasdorn 3 zusammenwirken. Dabei bleibt am aufgeweiteten Hohlkörper eine Öffnung, die durch den Blasdorn 3 verursacht wird. In den Bereichen neben dem Blasdorn 3 kann in der senkrecht zur Bildebene der Fig. 2 verlaufenden Trennebene der beiden Blasformhälften 1a, 1b weiteres Überschußmaterial abgequetscht werden, wobei in diesen Bereichen der Vorformling 5 bzw. der daraus herzustellende Hohlkörper unter Bildung einer Schweißnaht verschlossen wird, die in Fig. 2 nicht gesondert dargestellt ist. Entsprechendes gilt für den durch die Abquetschkante 3a, 3b bewirkten Abquetschvorgang.

Vorzugsweise bereits kurz vor Beendigung des Schließens der Blasform 1 wird mit dem Blasvorgang begonnen, d. h., daß mittels durch den Blasdorn zugeführter Druckluft der Vorformling 5 aufgeweitet und schließlich überall an der Wandung des Formnestes 2 zur Anlage gebracht wird und somit dessen Gestalt annimmt. Durch den Überdruck werden sowohl die äußere Schicht 6 als auch die innere aufgeschäumte Schicht 7 verformt. Dabei wird die innere, in Bezug auf ihre Dehnbarkeit und Festigkeit wenig stabile, da poröse Schicht 7 durch die äußere Schicht 6 gehalten und stabilisiert, da die aufgrund des Aufschäumvorganges entstandenen Bläschen 8 (Fig. 2a) der Schicht 7 beim Aufweitvorgang nach außen über die Schicht 6 hinaus nicht ausweichen können. Insbesondere die an der inneren Oberfläche des so hergestellten Hohlkörpers durch das Aufreißen der einzelnen sich in diesem Bereich befindlichen Bläschen entstandenen Öffnungen haben eine schalldämmende Wirkung.

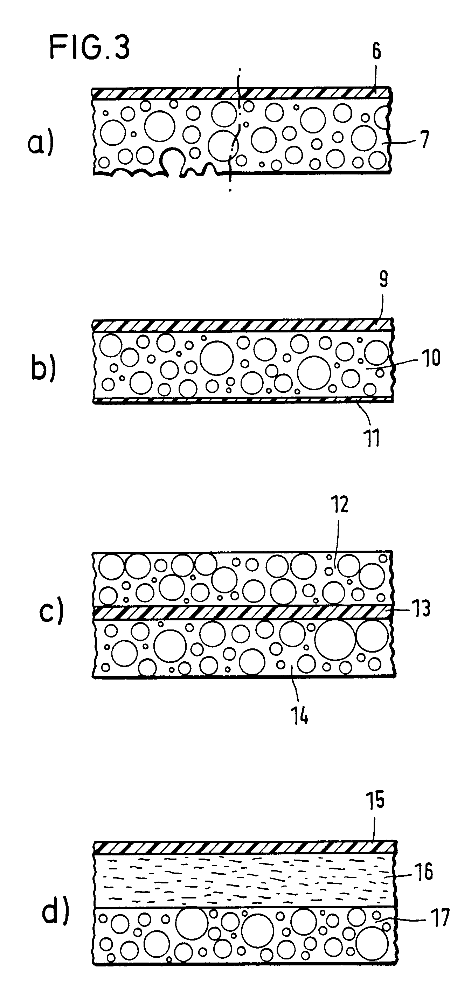

In Fig. 3 sind verschiedene Ausführungsformen der Wandung des Vorformlings bzw. des nach dem erfindungsgemäßen Verfahren hergestellten Hohlkörpers dargestellt. Das Ausführungsbeispiel gemäß Fig. 3a zeigt eine aus zwei Schichten bestehende Wandung, wobei die innere Schicht 7 aus aufgeschäumtem Material besteht und die äußere Schicht 6 aus nicht aufschäumbarem Material besteht. In den Ausführungsbeispielen gemäß der Fig. 3b, c und d sind dreischichtige Wandungen dargestellt. Bei dem Ausführungsbeispiel gemäß Fig. 3b handelt es sich um eine Wandung mit einer zwischen zwei nicht aufschäumbaren Schichten 9, 11 liegenden aufgeschäumten Schicht 10, wobei die innere nicht aufschäumbare Schicht dünner ist als die äußere. In Fig. 3c ist eine Wandung dargestellt, deren beide aufgeschäumten Schichten 12, 14 sich zu beiden Seiten einer nicht aufschäumbaren Schicht 13 befinden. Fig. 3d zeigt eine Wandung, bei der zwischen der aufgeschäumten und der nicht aufschäumbaren Schicht 17, 15 eine zusätzliche Schicht 16 aus einem thermoplastischen Kunststoff angeordnet ist, der mit anorganischem Füllmaterial, z. B. Glasfasern, gemischt ist.

Das Ausführungsbesispiel gemäß Fig. 3a zeigt links die aufgeschäumte Schicht mit teilweise aufgeplatzten Schaumbläschen. Rechts sind die Schaumbläschen geschlossen. In der Praxis wird die Oberfläche auch bei geschlossenen Bläschen abweichend von der zeichnerischen Darstellung nicht immer eine glatte Fläche sein. Entsprechend können die Schichten 12, 14 bzw. 17 in den Fig. 3c bzw. 3d ausgebildet sein.

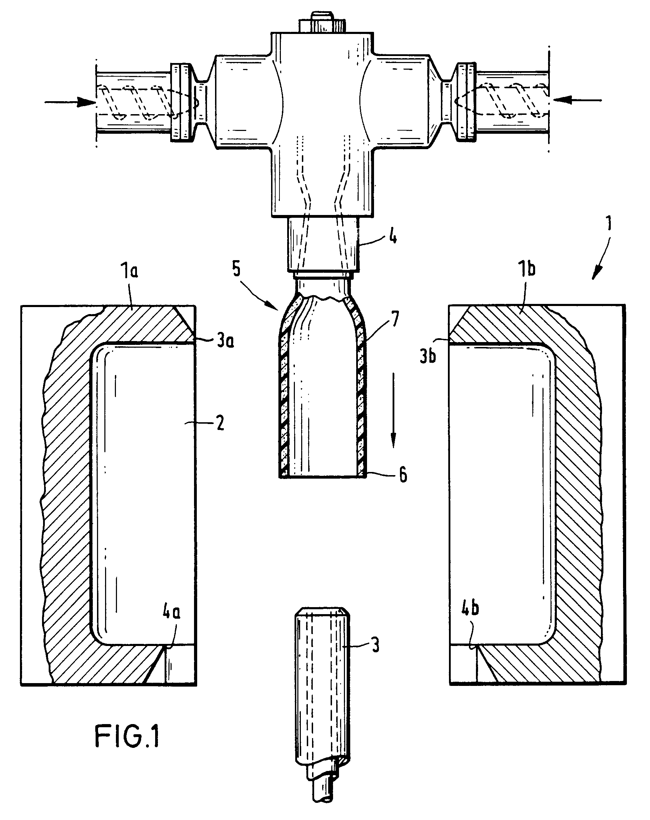

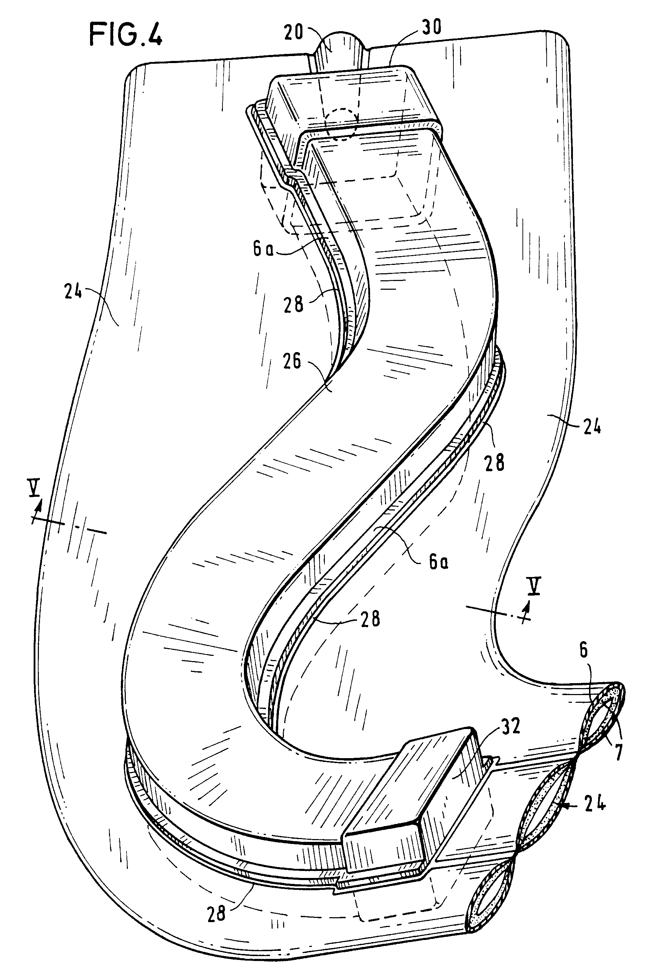

Fig. 4 zeigt einen unter Anwendung des Verfahrens gemäß der Erfindung hergestellten Hohlkörper in Form eines Rohrabschnittes 26, wie er beispielsweise verwendet wird, um innerhalb von Kraftfahrzeugen Leitungen zu verlegen, durch die beispielsweise Luft in den Passagierraum eines solchen Fahrzeuges geführt wird. Dieser Rohrabschnitt hat einen etwa rechteckigen Querschnitt. Seine Form wird im wesentlichen bestimmt durch den Raum innerhalb der Karosserie, durch welchen die Leitung verlegt wird. Der in Fig. 4 dargestellte Rohrabschnitt ist noch mit den im Zusammenhang mit der Beschreibung der Fig. 1 und 2 erwähnten Überschußmaterial versehen, welches beim Schließen der zweiteiligen Blasform 1 um den im allgemeinen schlauchförmigen Vorformling abgequetscht worden war. Dabei wird im allgemeinen so verfahren, daß das Überschußmaterial über einen dünnen Film 28 mit dem herzustellenden Hohlkörper 26 verbunden bleibt, der, nachdem der Hohlkörper 26 aus der Blasform herausgenommen worden ist, durchtrennt wird, um das Überschußmaterial vom Hohlkörper 26 zu lösen. Die Dicke des Films hängt im wesentlichen ab von der Kraft, mit welcher die Form geschlossen wird, und der Beschaffenheit der Abquetschkanten.

Der Rohrabschnitt 26 kann z. B. in der Weise hergestellt worden sein, daß sein in Fig. 4 der Zeichnung oben befindliches Ende sich unten in der Blasform befindet, wobei der Blasdorn 3 durch das stirnseitige Ende 30 in den Rohrabschnitt 26 bzw. den Vorformling, aus dem der Rohrabschnitt 26 hergestellt worden ist, hineinragt. Demzufolge ist der Abschnitt 20 jener Teil des Überschußmaterials, der stirnseitig zwischen den Abquetschkanten 4a, 4b und dem Blasdorn abgequetscht worden war. Daran schließen sich seitliche Abquetschbereiche an, in denen der Hohlkörper durch eine Schweißnaht verschlossen ist. Das am anderen Stirnende 32 des Rohrabschnittes 26 befindliche Abfallteil 24 entspricht somit dem Abfallteil 24 der Fig. 2, welches an dem dem Blasdorn 3 gegenüberliegenden Ende des Vorformlings bzw. des daraus herzustellenden Rohrabschnittes 26 durch die an der Blasform 1 befindlichen Abquetschkanten 3a, 3b beim Schliessen der ersteren abgequetscht worden war.

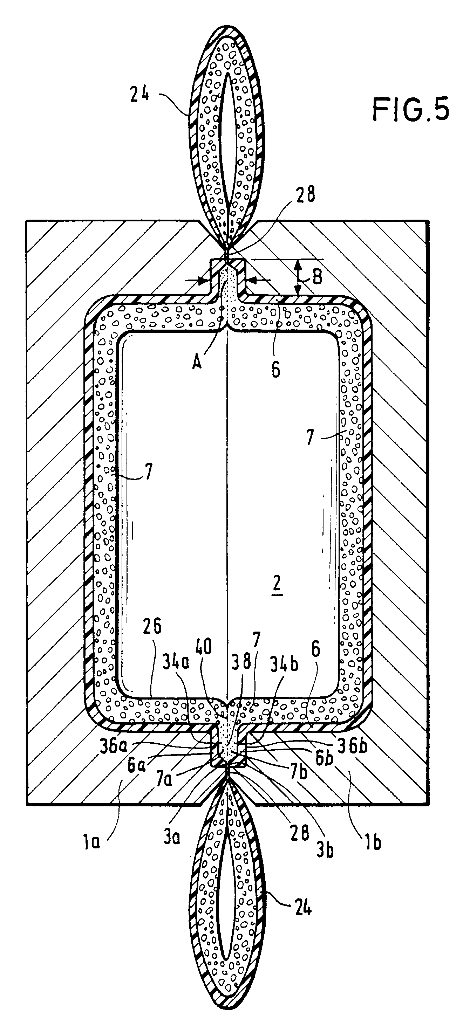

Fig. 4 läßt erkennen, daß der Rohrabschnitt 26 mit einer - abgesehen von der Öffnung im Bereich des Abfallstückes 20 - umlaufenden Abquetsch- und Schweißnaht versehen ist, die in größerem Maßstab in Fig. 5 der Zeichnung im Querschnitt dargestellt ist. Fig. 5 zeigt zusätzlich auch noch die Teile 1a, 1b der Blasform etwa in dem Stadium des Verfahrens, welches dem der Fig. 2 entspricht. D. h., daß der Hohlkörper 26 bereits innerhalb der Blasform 1 aufgeweitet ist. Analog dem Ausführungsbeispiel gemäß den Fig. 1 und 2 besteht die Wandung des Hohlkörpers aus zwei Schichten, von denen die innere Schicht 7 aus aufgeschäumtem Material und die äußere Schicht 6 aus nicht aufschäumbarem Material besteht.

Die beiden Formhälften 1a, 1b sind im Bereich ihrer Abquetschkanten 3a, 3b, die um die gesamte Blasform 1 bzw. deren Hälften 1a, 1b umlaufen, mit Ausnehmungen 34a, 34b versehen, deren im wesentlichen zueinander parallele Wandungen 36a, 36b in geschlossenem Zustand der Blasform 1 einen Raum begrenzen, der zum Formnest 2 hin offen und an seiner dem Formnest 2 abgekehrten Seite durch die Abquetschkanten 3a, 3b bzw. die diese tragenden Bereiche der Blasform 1a, 1b begrenzt ist.

Beim Schließen der beiden Blasformhälften 1a, 1b um den Vorformling 5 werden demzufolge in der letzten Phase dieser Schließbewegung die über die Abquetschkanten 3a, 3b und ggf. 4a, 4b nach außen über das Formnest 2 überstehenden Teile des im allgemeinen bereits voraufgeweiteten Vorformlings 5 durch die Abquetschkanten abgequetscht. Durch diesen Vorgang entstehen die den aufgeweiteten Hohlkörper 26 im Falle des Ausführungsbeispiels gemäß Fig. 4 allseitig umgebenden Abfallabschnitte 20, 24 aus Überschußmaterial, die im allgemeinen über den bereits erwähnten Film 28 mit dem aufgeweiteten Hohlkörper 26 verbunden bleiben, so daß sie nachträglich abgetrennt werden müssen.

Im Bereich des durch die Ausnehmungen 34a, 34b gebildeten Raums werden die einander gegenüberliegenden Wandbereiche 6a, 6b; 7a, 7b des im Bereich der Abquetschkanten und der Ausnehmungen 34a, 34b flach gedrückten Vorformlings bzw. des daraus herzustellenden Vorformlings gegeneinander gedrückt und miteinander verschweißt, so daß eine stegförmige Schweißverbindung 38 entsteht, durch die die Wandung des Vorformlings bzw. des daraus herzustellenden Hohlkörpers 26 in den Bereichen verschlossen wird, in denen das Abfallteil 24 abgequetscht worden ist. Die Breite A des Stegs 38, also dessen Erstreckung quer zu seinem Längsverlauf, ist kleiner als die Wanddicke des Vorformlings in nicht aufgeschäumtem Zustand der aufschäumbaren Schicht 7. Da die Schweißnahtbildung durch Zusammendrücken der einander gegenüberliegenden Wandbereiche 6a, 6b und 7a, 7b des Vorformlings 5 in dem durch die Ausnehmung 34a, 34b gebildeten Raum erfolgt, nachdem die Schicht 7 aufgeschäumt worden ist, erfahren beide Bereiche 7a, 7b der aufgeschäumten Schicht innerhalb des Raums 34a, 34b eine Verringerung ihrer Dicke, die im wesentlichen verursacht wird durch ein Verdichten der aufgeschäumten Bereiche 7a, 7b der Schicht 7 im Bereich des Raums 34a, 34b unter gleichzeitiger Verdrängung der in den Luftbläschen dieser Schicht befindlichen Luft. Obwohl das die aufgeschäumte Schicht 7 bildende Material eine merklich größere Fließfähigkeit hat als dasselbe Material in nicht aufgeschäumtem Zustand, wird ein Entweichen der innerhalb der Ausnehmung befindlichen Bereiche 7a, 7b der aufgeschäumten Schicht 7 in Richtung auf das Formnest 2 aufgrund des sich im Raum 34a, 34b durch den sich einstellenden Strömungswiderstand reduziert, so daß ein ausreichend großer Teil der beiden Schichtabschnitte 7a, 7b innerhalb des sich bildenden Steges 38 verbleibt, um den beiden Formteilen 1a, 1b im Bereich von deren Wandabschnitten 36a, 36b im Zuge der Schließbewegung einen Widerstand entgegenzusetzen, der ausreicht, um den für eine gute Schweißnahtbildung erforderlichen Druck innerhalb des im Raum 34a, 34b befindlichen Materials aufzubauen. Im Ergebnis bildet sich somit die stegartige Schweißverbindung 38, in welcher die beiden auf die aufgeschäumten Schicht 7 des Vorformling zurückgehenden Abschnitte 7a, 7b im wesentlichen wieder den Zustand erreicht haben, der vor dem Aufschäumen der Schicht 7 vorhanden war, so daß die stegartige Schweißverbindung 38 aus mehr oder weniger homogenem Material besteht, welches keine oder nur eine so unwesentliche restliche Aufschäumung aufweist, daß dadurch die Festigkeit der Schweißnaht nicht beeinträchtigt wird.

Selbstverständlich setzt sich die Schweißverbindung auch noch in den in Richtung auf das Formnest 2 an den Raum 34a, 34b bzw. den Steg 38 anschließenden Bereich 40 fort. Dort bleibt die innere Schicht 7, wenn auch vielleicht in verringertem Maße, aufgeschäumt, so daß die Haltbarkeit der dort entstehenden Schweißverbindung möglicherweise nicht allen Anforderungen genügt, zumal dort der Druck, unter welchem die beiden miteinander zu verschweißenden Bereiche gegeneinander gepreßt werden, wesentlich geringer ist als innerhalb des Raumes 34a, 34b. Dies ist jedoch ohne Bedeutung, da die Festigkeit der Schweißverbindung durch den Steg 38 gewährleistet ist.

Die Tiefe B der stegartigen Schweißverbindung 38 solle nach Möglichkeit nicht kleiner sein als die Breite A, um so den erforderlichen Strömungswiderstand gegen das Herausfließen insbesondere des die aufgeschäumten Schichtabschnitt 7a, 7b bildenden Materials aus dem Raum 34a, 34b im Zuge der Schweißnahtbildung zu verhindern.

Nach Entfernen des in der Blasform 1 abgequetschen Abfallmaterials 20, 24 wird es noch notwendig sein, die Stirnflächen 30 und 32, beispielsweise durch einen Schneidvorgang, zu entfernen, um die Enden des Rohrabschnittes zu öffnen, beispielsweise zur Herstellung einer Verbindung mit einem anzuschließenden Rohrabschnitt. Es bedarf keiner näheren Erläuterung, daß es nicht erforderlich ist, die Schweißnaht im Bereich der ohnehin später abzutrennenden Enden in der vorbeschriebenen Weise auszubilden, da ihre Haltbarkeit für die Benutzung des Enderzeugnisses keine Bedeutung hat.

## Patentansprüche

1. Verfahren zum Herstellen von Hohlkörpern, deren Wandung teilweise aus aufgeschäumtem thermoplastischem Kunststoff besteht, im Extrusions-Blasverfahren, dadurch gekennzeichnet, daß zunächst ein wenigstens zwei Schichten, von denen wenigstens eine Schicht aus aufschäumbarem Kunststoff besteht, aufweisender, vorzugsweise schlauchförmiger Vorformling extrudiert und danach zunächst die Schicht(en) aus aufschäumbarem Material aufgeschäumt wird beziehungsweise werden und eine Blasform um den Vorformling geschlossen und dieser in der Blasform bis zur Anlage an der inneren Formwandung aufgeweitet wird unter Anwendung von innerem Überdruck, der so bemessen ist, daß die aufgeschäumte Schicht(en) nicht oder nur unwesentlich komprimiert wird beziehungsweise werden.

2. Verfahren nach Anspruch 1, dadurch gekennzeichnet, daß eine Schicht aus aufschäumbarem Material innenseitig und eine Schicht aus nicht aufschäumbarem Material außenseitig angeordnet ist.

3. Verfahren nach Anspruch 1, dadurch gekennzeichnet, daß eine Schicht aus aufschäumbarem Material außenseitig und eine Schicht aus nicht aufschäumbarem Material innenseitig angeordnet ist.

4. Verfahren nach Anspruch 1, dadurch gekennzeichnet, daß eine Schicht aus aufschäumbarem Material zwischen zwei Schichten aus nicht aufschäumbarem Material angeordnet ist.

5. Verfahren nach Anspruch 4, dadurch gekennzeichnet, daß die innen angeordnete Schicht aus nicht aufschäumbarem Material dünner ist als die außen angeordnete Schicht aus nicht aufschäumbarem Material.

6. Verfahren nach Anspruch 1, dadurch gekennzeichnet, daß zwischen einer äußeren Schicht aus aufschäumbarem Material und einer inneren Schicht aus aufschäumbarem Material eine Schicht aus nicht aufschäumbarem Material angeordnet ist.

7. Verfahren nach Anspruch 1, dadurch gekennzeichnet, daß zwischen der äußeren Schicht aus nicht aufschäumbarem Material und der inneren Schicht aus aufschäumbarem Material eine Schicht aus thermoplastischem Kunststoff angeordnet ist, die mit anorganischem Füllmaterial gemischt ist.

8. Verfahren nach einem oder mehreren der vorhergehenden Ansprüche, dadurch gekennzeichnet, daß die Schicht(en) aus nicht aufschäumbarem Material und die Schicht(en) aus aufschäumbarem Material miteinander verschweißt werden.

9. Verfahren nach einem oder mehreren der vorhergehenden Ansprüche, dadurch gekennzeichnet, daß die Schicht(en) aus nicht aufschäumbarem Material und die Schicht(en) aus aufschäumbarem Material durch einen Haftvermittler miteinander verbunden werden.

10. Verfahren nach einem oder mehreren der vorhergehenden Ansprüche, dadurch gekennzeichnet, daß beim Extrudieren des Vorformlinges die den letzteren bildenden Schichten bereits innerhalb des Extrusionskopfes miteinander verbunden werden.

11. Verfahren nach einem der vorhergehenden Ansprüche, dadurch gekennzeichnet, daß die Schicht(en) aus nicht aufschäumbarem Material 5 bis 20 % der gesamten Wanddicke in aufgeweitetem Zustand ausmacht bzw. ausmachen.

12. Verfahren nach Anspruch 11, dadurch gekennzeichnet, daß die Schicht(en) aus nicht aufschäumbarem Material 5 bis 10 % der gesamten Wanddicke in aufgeweitetem Zustand ausmacht bzw. ausmachen.

13. Verfahren nach Anspruch 5, dadurch gekennzeichnet, daß die innen angeordnete Schicht aus nicht aufschäumbarem Material 5 bis 10% und die außen angeordnete Schicht aus nicht aufschäumbarem Material 5 bis 20% der gesamten Wanddicke in aufgeweitetem Zustand ausmachen.

14. Verfahren nach einem oder mehreren der vorhergehenden Ansprüche, dadurch gekennzeichnet, daß das Aufweiten des Vorformlings in der Blasform durch einen inneren Überdruck erfolgt, der nicht mehr als 1 bar beträgt.

15. Verfahren nach Anspruch 1, dadurch gekennzeichnet, daß Bereiche des Vorformlings bzw. des aus diesem herzustellenden Hohlkörpers beim Schließen der mehrteiligen Blasform durch an den Blasformteilen befindliche Abquetschkanten abgequetscht werden und dabei der Vorformling gleichzeitig durch wenigstens eine Schweißnaht verschlossen wird, die als Steg ausgebildet ist, in welchem einander gegenüberliegende Wandbereiche des Vorformlings gegeneinandergedrückt werden, und die aufgeschäumte(n) Schicht(en) im Bereich dessomit doppelwandigen Steges durch den bei der Bildung desselben ausgeübten Druck eine Verdichtung und dabei eine Verringerung ihrer Dicke erfährt bzw. erfahren derart, daß die Dicke der verdichteten Schicht(en) kleiner ist als die Dicke dieser Schicht(en) in aufgeschäumtem Zustand.

16. Verfahren nach Anspruch 15, dadurch gekennzeichnet, daß bei Bildung der stegförmig verdickten Schweißnaht die letztere bildenden Wandbereiche des Vorformlings so gepreßt werden, daß die aufgeschäumte(n) Schicht(en) auf eine Dichte und damit Dicke komprimiert wird bzw. werden, die etwa der Dichte und damit der Dicke dieser Schichte(n) in ungeschäumtem Zustand entspricht.

17. Verfahren nach Anspruch 1, dadurch gekennzeichnet, daß Bereiche des Vorformlings bzw. des aus diesem herzustellenden Hohlkörpers beim Schließen der mehrteiligen Blasform durch an den Blasformteilen befindliche Abquetschkanten abgequetscht werden und dabei der Vorformling gleichzeitig durch wenigstens eine Schweißnaht verschlossen wird, die als Steg ausgebildet ist, in welchem einander gegenüberliegende Wandbereiche des Vorformlings gegeneinandergedrückt werden derart, daß der resultierende doppelwandige Steg eine Gesamtdicke (A) aufweist, die kleiner ist als die Summe der Dicke sämtlicher Schichten bei der Ausgangsdichte und damit der Summe der Dicken aller Schichten in nicht aufgeschäumtem Zustand.

18. Verfahren nach Anspruch 15, dadurch gekennzeichnet, daß die Tiefe (B) der stegförmig verdickten Schweißnaht quer zu ihrer Längserstreckung größer ist als ihre Breite (A).

## Claims

1. A process for producing hollow bodies whose wall partially comprises foamed thermoplastic material, by an extrusion blow moulding procedure, characterised in that firstly a preferably tubular preform which has at least two layers of which at least one layer comprises foamable plastics material is extruded and thereafter firstly the layer or layers of foamable material is or are foamed up and a blowing mould is closed around the preform and the latter is expanded in the blowing mould until it bears against the inside mould wall, using increased internal pressure which is such that the foamed layer or layers is or are not compressed or is or are only compressed to an insignificant degree.

2. A process according to claim 1 characterised in that a layer of foamable material is arranged on the inside and a layer of non-foamable material is arranged on the outside.

3. A process according to claim 1 characterised in that a layer of foamable material is arranged on the outside and a layer of non-foamable material is arranged on the inside.

4. A process according to claim 1 characterised in that a layer of foamable material is arranged between two layers of non-foamable material.

5. A process according to claim 4 characterised in that the inwardly disposed layer of non-foamable material is thinner than the outwardly disposed layer of non-foamable material.

6. A process according to claim 1 characterised in that a layer of non-foamable material is arranged between an outer layer of foamable material and an inner layer of foamable material.

7. A process according to claim 1 characterised in that a layer of thermoplastic material mixed with inorganic filler material is arranged between the outer layer of non-foamable material and the inner layer of foamable material.

8. A process according to one or more of the preceding claims characterised in that the layer or layers of non-foamable material and the layer or layers of foamable material are welded together.

9. A process according to one or more of the preceding claims characterised in that the layer or layers of non-foamable material and the layer or layers of foamable material are joined together by a bonding agent.

10. A process according to one or more of the preceding claims characterised in that in the operation of extruding the preform the layers forming same are already joined together within the extrusion head.

11. A process according to one of the preceding claims characterised in that the layer or layers of non-foamable material constitutes or constitute from 5 to 20% of the total wall thickness in the expanded condition.

12. A process according to clam 11 characterised in that the layer or layers of non-foamable material constitutes or constitute from 5 to 10% of the total wall thickness in the expanded condition.

13. A process according to claim 5 characterised in that the inwardly disposed layer of non-foamable material constitutes from 5 to 10% of the total wall thickness in the expanded condition and the outwardly disposed layer of non-foamable material constitutes from 5 to 20% of the total wall thickness in the expanded condition.

14. A process according to one or more of the preceding claims characterised in that the operation of expanding the preform in the blowing mould is effected by an increased internal pressure which is not more than 1 bar.

15. A process according to claim 1 characterised in that regions of the preform or the hollow body to be produced therefrom, upon closure of the multi-part blowing mould, are squeezed off by squeeze edges disposed on the blowing mould parts and in that operation the preform is simultaneously closed by at least one welded seam which is in the form of a flange in which mutually oppositely disposed wall regions of the blank are pressed against each other, and the foamed layer or layers in the region of the flange which is thus double-walled experiences or experience compacting by the pressure applied in the formation of the flange and therewith a reduction in their thickness such that the thickness of the compacted layer or layers is less than the thickness of said layer or layers in the foamed condition.

16. A process according to claim 15 characterised in that, in the formation of the welded sea which is compacted in a flange-like configuration the wall regions of the preform which form the welded seam are pressed in such a way that the foamed layer or layers is or are compressed to a density and thus thickness which approximately corresponds to the density and thus the thickness of said layer or layers in the unfoamed condition.

17. A process according to claim 1 characterised in that regions of the preform or the hollow body to be produced therefrom, upon closure of the multi-part blowing mould, are squeezed off by squeeze edges provided on the blowing mould parts and in that operation the preform is simultaneously closed by at least one welded sea which is in the form of a flange in which mutually oppositely disposed wall region of the preform are pressed against each other in such a way that the resulting double-wall flange is of a total thickness (A) which is less than the sum of the thicknesses of all layers at the initial density and thus the sum of the thicknesses of all layers in the non-foamed condition.

18. A process according to claim 15 characterised in that the depth (B) of the welded seam which is thickened in a flange configuration is greater transversely to its longitudinal extent than its width (A).

## Revendications

1. Procédé pour fabriquer des corps creux ayant une paroi faite en partie de matière thermoplastique en mousse, en opérant par extrusion-soufflage, caractérisé en ce qu'on réalise d'abord par extrusion une ébauche de préférence tubulaire et comportant une paroi faite d'au moins deux couches, dont l'une au moins est en matière plastique apte à former une mousse, après quoi on provoque la formation de la mousse dans chaque couche prévue pour cela, et on ferme un moule de souffage autour de l'ébauche que l'on met en forme par expansion sous l'effet d'une surpression interne, jusqu'à appliquer la paroi de l'ébauche contre la face interne du moule, cette surpression interne étant calculée pour que chaque couche de matière en mousse ne subisse ainsi aucun effet de compression important.

2. Procédé selon la revendication 1, caractérisé en ce qu'une couche de matière apte à former une mousse est disposée du côté de la face interne, une couche de matière prévue pour rester compacte étant disposée du côté de la face externe.

3. Procédé selon la revendication 1, caractérisé en ce qu'une couche de matière apte à former une mousse est disposée du côté de la face externe, une couche de matière prévue pour rester compacte étant disposée du côté de la face interne.

4. Procédé selon la revendication 1, caractérisé en ce qu'une couche de matière apte à former une mousse est disposée entre deux couches de matière prévue pour rester compacte.

5. Procédé selon la revendication 4, caractérisé en ce que la couche interne de matière prévue pour rester compacte est plus mince que la couche externe de matière prévue pour rester comptacte.

6. Procédé selon la revendication 1, caractérisé en ce qu'une couche de matière prévue pour rester compacte est disposée entre une couche externe de matière apte à former une mousse, et une couche interne de matière apte à former une mousse.

7. Procédé selon la revendication 1, caractérisé en ce qu'une couche de matière plastique contenant une charge minérale est disposée entre la couche externe en matière prévue pour rester compacte et la couche interne en matière apte à former une mousse.

8. Procédé selon l'une ou plusieurs des revendications précédentes, caractérisé en ce que les couches de matière prévue pour rester compacte et les couches de matière apte à former une mousse sont fixées l'une à l'autre par soudage.

9. Procédé selon l'une ou plusieurs des revendications précédentes, caractérisé en ce que les couches de matière prévue pour rester compacte et les couches de matière apte à former une mousse sont fixées l'une à l'autre par un adhésif.

10. Procédé selon l'une ou plusieurs des revendications précédentes, caractérisé en ce que, sous l'effet de l'extrusion de la pré-ébauche, les couches de matière constituant celle-ci sont déjà fixées l'une à l'autre à l'intérieur de la tête d'extrusion.

11. Procédé selon l'une des revendications précédentes, caractérisé en ce que l'ensemble des couches de matière prévue pour rester compacte constituent de 5 à 20% de l'épaisseur totale de la paroi de l'ébauche en état d'expansion.

12. Procédé selon la revendication 11, caractérisé en ce que l'ensemble des couches de matière prévue pour rester compacte constituent de 5 à 10% de l'épaisseur totale de la paroi de l'ébauche en état d'expansion.

13. Procédé selon la revendication 5, caractérisé en ce que la couche interne en matière prévue pour rester compacte constitue de 5 à 10% de l'épaisseur totale de la paroi de l'ébauche en état d'expansion, la couche externe en matière prévue pour rester compacte constituant de 5 à 20% de la même épaisseur.

14. Procédé selon l'une ou plusieurs des revendications précédentes, caractérisé en ce qu'on réalise l'expansion de l'ébauche dans le moule de soufflage au moyen d'une surpression interne qui ne dépasse pas 1 bar.

15. Procédé selon la revendication 1, caractérisé en ce qu'on sectionne par écrasement certains endroits de l'ébauche - et donc du corps creux à réaliser à partir de celle-ci - au moyen de lèvres de sectionnement prévues sur les parties constitutives du moule de soufflage pour agir au moment de la fermeture du moule, l'ébauche se trouvant ainsi fermée en même temps par au moins un joint soudé en bourrelet, dans lequel les bords de la paroi de l'ébauche sont superposés et comprimés l'un contre l'autre, et chacune des couches de matière en mousse prise dans le joint soudé en bourrelet - ainsi réalisé en double épaisseur - subissant alors une compression qui réduit son épaisseur par raport à celle de la couche dont la mousse était déjà formée.

16. Procédé selon la revendication 15, caractérisé en ce que, pour réaliser le joint soudé en bourrelet comprimé, on soumet les bords concernés de la paroi de l'ébauche à une pression de serrage telle que chacune des couches de matière en mousse retrouve sensiblement la densité et donc l'épaisseur qu'avait cette couche à l'état compact, avant formation de la mousse.

17. Procédé selon la revendication 1, caractérisé en ce qu'on sectionne par écrasement certains endroits de l'ébauche - et donc du corps creux à réaliser à partir de celle-ci - au moyen de lèvres de sectionnement prévues sur les parties constitutives du moule de soufflage pour agir au moment de la fermeture du moule, l'ébauche se trouvant ainsi fermée en même temps par au moins un joint soudé en bourrelet, dans lequel les bords des parois de l'ébauche sont superposés et comprimés l'un contre l'autre, de telle manière que la cote d'épaisseur totale (A) de ce joint soudé en bourrelet - ainsi réalisé en double épaisseur - est inférieure à la somme des épaisseurs initiales de l'ensemble des couches concernées, et donc inférieure à l'épaisseur de l'ensemble de ces couches avant formation de la mousse.

18. Procédé selon la revendication 15, caractérisé en ce que la cote de largeur (B) du joint soudé en bourrelet, mesurée perpendiculairement à son étendue en longueur, est inférieure à sa cote d'épaisseur (A).
